# EUROPÄISCHE PATENTSCHRIFT

(11) **EP 3 257 825 B1**
(45) Veröffentlichungstag und Bekanntmachung des Hinweises auf die Patenterteilung: **18.11.2020**
(21) Anmeldenummer: 16175060.9
(22) Anmeldetag: 17.06.2016
(51) Int. Cl.: C03C 21/00

(54) **VERFAHREN ZUR REDUKTION DER NATRIUMKONZENTRATION IM BEREICH EINER OBERFLÄCHE EINER GLASSCHEIBE**
METHOD FOR REDUCING SODIUM CONCENTRATION IN THE VICINITY OF A SURFACE OF A GLASS SHEET
PROCEDE DE REDUCTION DE LA CONCENTRATION DE SODIUM DANS LA ZONE D'UNE SURFACE D'UNE VITRE

(43) Veröffentlichungstag der Anmeldung: 20.12.2017
(73) Patentinhaber: Glas Trösch Holding AG, 6374 Buochs (CH)
(72) Erfinder: SYNOWCZYK, Andreas, 4800 Zofingen (CH)
(74) Vertreter: Keller Schneider Patent- und Markenanwälte AG (Bern)

(56) Entgegenhaltungen:
- EP-A1- 1 449 816
- DE-A1-102005 039 298

## Beschreibung

### Technisches Gebiet

Die Erfindung betrifft ein Verfahren zur Reduktion der Natriumkonzentration im Bereich mindestens einer Oberfläche einer Glasscheibe mittels einer Ionenausstauchreaktion. DE 10 2005 039 298 A1; Schott AG 2 offenbart antimikrobiell ausgerüstete Glaser und Glaskeramiken sowie Verfahren zu deren Herstellung. EP 1 449 816 A1; Gemtron Corp beschreibt Glassubstrate mit einer antimikrobiellen Oberflache sowie Verfahren zu deren Herstellung.

### Darstellung der Erfindung

Glasalterungs- und Verwitterungseffekte, welche auch unter dem Begriff "Glaskorrosion" bekannt sind, treten in sämtlichen Einsatzgebieten von Flachglas auf, bei denen ein fortwährender Wechsel aus Kondensation und Verdampfen von Wasser vorkommt. Insbesondere sind Glasscheiben in Schwimmhallen, im Sanitärbereich, in Küchen sowie bei Autowaschanlagen betroffen.

Glasalterungs- und Verwitterungseffekte sind beispielsweise als kreisförmige oder ovale, punktuell vorkommende Strukturen auf einer Glasoberfläche erkennbar. Teilweise treten diese jedoch auch grossflächig auf einer Glasscheibe auf. Diese Beeinträchtigungen sind optisch wahrnehmbar und können sich störend auf die Transparenz einer Glasscheibe auswirken. Ferner wird durch entstehende Unebenheiten auf der Glasoberfläche die Anlagerung von Kalk vereinfacht.

Diese Glasalterungs- und Verwitterungseffekte lassen sich nur durch eine Politur der Glasoberfläche beseitigen.

Die Anmelderin hat herausgefunden, dass die Glasalterungs- und Verwitterungseffekte einen Zusammenhang mit innerhalb des Glassubstrats vorhandenen Natriumkationen, welche aus dem in der Glasschmelze verwendetem Natriumoxid stammen, haben. Die innerhalb des Glassubstrats relativ mobilen Natriumkationen reagieren auf der Glasoberfläche mit kondensiertem Wasser zu Natriumhydroxid (NaOH). Ferner findet eine Reaktion zwischen Kondenswasser auf der Glasoberfläche und dem in der Umgebungsluft vorhandenen Kohlendioxid zu Kohlensäure (H₂CO₃) statt. Das Natriumhydroxid sowie die Kohlensäure reagieren in der Folge zu Natriumcarbonat (Na₂CO₃) und Wasser. Die Reaktion zwischen Natriumhydroxid und Kohlensäure kann zeitlich verzögert auftreten, wobei das Natriumhydroxid auf der Glasoberfläche mikroskopische Ätzstrukturen hinterlässt.

Aufgabe der Erfindung ist es, eine dem eingangs genannten technischen Gebiet zugehörendes Verfahren zu schaffen, welches eine Reduktion der Natriumkonzentration im Bereich mindestens einer Oberfläche einer Glasscheibe ermöglicht, so dass die Entstehung von Glasalterungs- und Verwitterungseffekten der Glasscheibe reduziert oder verhindert werden können.

Die Lösung der Aufgabe ist durch die Merkmale des Anspruchs 1 definiert. Gemäss der Erfindung wird in einem ersten Schritt eine Glasscheibe mit mindestens einer Oberfläche vorgelegt. Anschliessend wird auf die mindestens eine Oberfläche eine Siebdruckpaste, welche mindestens ein Siebdrucköl aufweist, aufgetragen. Die Siebruckpasste wird getrocknet, insbesondere bei 60° C, und die Glasscheibe wird anschliessend einer Wärmebehandlung bei einer Temperatur von über 500° C, insbesondere von über 600° C unterzogen. Schlussendlich wird die Siebruckpaste von der mindestens einen Oberfläche entfernt. Die Siebruckpaste weist eine Konzentration an Natrium von höchstens 10 ppm auf, wobei mindestens ein Metalloxid in der Siebdruckpaste vorhanden ist.

Durch die Zusammensetzung der Siebdruckpaste und der thermischen Aktivierung durch die Wärmebehandlung findet ein Diffusionsprozess zwischen der Siebdruckpaste und dem Glassubstrat im Bereich der mindestens einen Oberfläche statt, wobei aufgrund der unterschiedlichen Konzentrationen Natriumkationen aus dem Glassubstrat in die Siebruckpaste diffundieren. Damit die mindestens eine Oberfläche elektroneutral bleibt, wird in der Folge ein Kation aus der Siebdruckpaste in das Glassubstrat eindiffundieren. Dieses Kation kann beispielsweise ein Metallkation oder ein Proton sein.

Vorzugsweise handelt es sich bei der Glasscheibe um ein Flachglas, welches mittels eines Floatglasverfahrens hergestellt wurde. Typischerweise wird bei einem Floatglasverfahren ein Kalk-Natron-Glas hergestellt, welches aus 71 - 75 Gew.-% Siliziumdioxid, 10 - 16 Gew.-% Natriumoxid und 10 - 15 Gew.-% Calciumoxid besteht. Bei der Anwendung des Verfahrens auf Floatglas ergibt sich ein hohes Konzentrationsgefälle des Natriums zwischen dem Glassubstrat und der Siebdruckpaste.

Natriumkationen sind aufgrund ihres kleinen lonenradius innerhalb des Glassubstrats im Vergleich zu anderen Ionen hochbeweglich. Aufgrund ihrer Elektropositivität sind Natriumkationen gegenüber Anionen reaktiv, daher wird Natrium im Glassubstrat als elektroneutrale Verbindung, insbesondere als Natriumoxid, vorliegen und erst als Folge der Wärmebehandlung durch thermische Aktivierung als Kation vorliegen.

Die Siebdruckpaste wird vorzugsweise mittels eines Siebdruckverfahrens auf die mindestens eine Oberfläche aufgetragen.

Die Wärmebehandlung erfolgt vorzugsweise im Rahmen eines Herstellungsverfahrens für Einscheibensicherheitsglas (ESG). So lässt sich das erfindungsgemässe Verfahren in den Herstellungsprozess für Einscheibensicherheitsgläser integrieren. Bei Herstellungsverfahren für ESG wird eine Glasscheibe zunächst auf ca. 600° C erhitzt und in der Folge schlagartig abgekühlt. Dabei kühlen sich die oberflächennahen Zonen des Glases schneller ab als der Kern, wodurch im Kern eine Zug- und an der Oberfläche eine Druckspannung entsteht. Dies verleiht dem ESG eine erhöhte Stoss- und Schlagfestigkeit im Vergleich zu normalem Flachglas. Zudem zerbricht ESG in kleine Scherben, wodurch die Verletzungsgefahr vermindert wird.

Die Wärmebehandlung erfolgt vorzugsweise mit Temperaturen über 500° C, insbesondere bevorzugt von über 600° C, bevorzugt jedoch kleiner als 1200° C.

Wird in der Siebdruckpaste ein Metallsulfid eingesetzt, so reagiert dieses in einer Redoxreaktion mit den aus dem Glassubstrat in die Siebdruckpaste eindiffundierenden Natriumkationen. Es wurde beobachtet, dass dadurch die Rauheit der mindestens einen Oberfläche erhöht werden kann. Durch die Wärmebehandlung wird das Metallsulfid aktiviert, wobei das Metallkation mit Luftsauerstoff zu einem Metalloxid oxidiert. Die Sulfidanionen (S²⁻) reagieren in der Siebdruckpaste mit Luftsauerstoff zu Sulfitanionen (SO₃²⁻), welche anschliessend mit den Natriumkationen eine lonenbindung zu Natriumsulfit (Na₂SO₃) eingehen. Das Natriumsulfit wird in Anwesenheit von Sauerstoff und Wärme zu Natriumsulfat (Na₂SO₄) oxidiert.

Obwohl davon ausgegangen wird, dass eine erhöhte Rauheit die Entstehung von Glasalterungs- und Verwitterungseffekten begünstigt, wurde überraschend festgestellt, dass durch das erfindungsgemässe Verfahren behandelte Oberflächen von Glasscheiben trotzt der erhöhten Rauheit weit weniger anfällig für die erwähnten Glasalterungs- und Verwitterungseffekte sind als glatte Oberflächen, welche nicht mit dem erfindungsgemässen Verfahren behandelt wurden.

Ferner werden durch den Einsatz von Metallsulfid in der Siebdruckpaste durch die oben erwähnte Reaktion der Sulfitanionen mit den Natriumkationen kontinuierlich Natriumkationen entzogen, wodurch der Konzentrationsunterschied von Natrium zwischen dem Glassubstrat und der Siebdruckpaste über eine längere Zeit konstant gehalten werden kann. Dadurch wird auch die Diffusionsrate über eine längere Zeit konstant gehalten. Ferner bewirkt der Entzug von Natriumkationen durch die Reaktion mit den Sulfitanionen eine Erhöhung der Aufnahmekapazität der Siebdruckpaste für Natriumkationen.

Vorzugsweise beträgt die Konzentration von Alkalimetallen in der Siebdruckpaste höchstens 10 ppm. Dadurch wird verhindert, dass ein Austausch der innerhalb des Glassubstrats vorhandenen Natriumkationen mit einem anderen Alkalimetallkation aus der Siebdruckpaste stattfindet.

Als Metalloxid wird vorzugsweise ein thermisch stabiles Metalloxid verwendet, insbesondere ein Metalloxid mit einer Schmelztemperatur von über 2000° C.

Dadurch verhält sich das Metalloxid unter den thermischen Bedingungen des Verfahrens vollständig stabil, wobei das Metallkation nicht an den Diffusionsvorgängen zwischen der Siebdruckpaste und dem Substrat der Glasscheibe teilnehmen.

Vorzugsweise wird als Metalloxid ein Metalloxid mit einer Standardbildungsenthalpie kleiner als -800 kJ/mol, insbesondere kleiner als -1100 kJ/mol verwendet. Ein derartiges Metalloxid ist chemisch inert, das heisst reaktionsträge, so dass sichergestellt ist, dass dieses nicht unerwünschte Reaktionen mit der mindestens einen Oberfläche der Glasscheibe bzw. unerwünschte Redoxreaktionen mit Komponenten der Glasscheibe eingeht.

In der Tat konnte beobachtet werden, dass bei der Verwendung eines thermisch stabilen und chemisch inerten Metalloxids eine Reduktion der Natriumkonzentration im Bereich einer Oberfläche einer Glasscheibe verringert werden konnte, ohne dass die Oberfläche durch das erfindungsgemässe Verfahren verändert worden ist.

Das mindestens eine Metalloxid und/oder das mindestens eine Metallsulfid liegen vorzugsweise je in einer Konzentration von 25 Gew.-% bis 60 Gew.-%, vorzugsweise von 30 bis 52 Gew.-% vor. Bei Anwesenheit sowohl eines Metalloxids als auch eines Metallsulfids beträgt die Konzentration beider Metallsalze zusammen in der Siebdruckpaste vorzugsweise nicht über 80 Gew.-%.

In einer bevorzugten Ausführungsform wird eine Siebdruckpaste mit 33 Gew.-% eines Metalloxids und 33 Gew.-% eines Metallsulfids verwendet. In einer weiteren bevorzugten Ausführungsform umfasst die Siebdruckpaste nur wenigstens ein Metalloxid in einer Konzentration von 50 Gew.-%.

Falls mehrere Metalloxide und/oder mehrere Metallsulfide verwendet werden, so liegt die Konzentration aller Metalloxide und/oder aller Metallsulfide, die in der Siebdruckpaste enthalten sind, in den erwähnten Bereichen von 25 Gew.-% bis 60 Gew.-%, vorzugsweise von 30 Gew.-% bis 52 Gew.-%.

Als Metalloxid wird vorzugsweise Zirkon(IV)oxid verwendet. Zirkon(IV)oxid weist eine Schmelztemperatur von 2715° C sowie eine Standardbildungsenthalpie von -1106 kJ/mol auf. Dadurch ist Zirkon(IV)oxid für das erfindungsgemässe Verfahren besonders gut geeignet.

Ferner wurde überraschend festgestellt, dass durch die Anwesenheit von Zirkon(IV)oxid in der Siebdruckpaste die Diffusion von Natriumkationen vom Glassubstrat in die Siebdruckpaste erhöht werden konnte. Es scheint, als dass das Zirkon(IV)oxid besonders gut geeignet ist, diesen Diffusionsprozess zu unterstützen. Die genauen Gründe hierzu sind nicht vollständig klar. Allerdings wurde festgestellt, dass die Konzentration an Natriumkationen in einer Siebdruckpaste mit Zirkon(IV)oxid nach Abschluss des Verfahrens ca. um das 30fache erhöht war.

Vorzugsweise umfasst die Siebdruckpaste Zinn(II)sulfid. Durch die Verwendung von Zinn(II)sulfid findet bei einer Glasscheibe aus Floatglas keine Farbveränderung der mindestens einen Oberfläche statt.

Falls die Siebdruckpaste sowohl mindestens ein Metalloxid als auch mindestens ein Metallsulfid umfasst, beträgt das Verhältnis der Konzentration des Metalloxids zur Konzentration des Metallsulfids in der Siebdruckpaste in Gewichtsprozent vorzugsweise 1:1. Bei diesem Verhältnis wurden besonders gute Resultate erzielt.

Vorzugsweise wird mindestens ein Polypropylenglykol als Siebdrucköl verwendet, insbesondere ein Mischung von Polypropylenglykolen mit unterschiedlichen Molekulargewichten.

Insbesondere bevorzugt werden Polypropylenglykole mit einem Molekulargewicht von 400 g/mol und 100 g/mol verwendet.

Durch die Mischung von Polypropylenglykolen mit unterschiedlichen Molekulargewichten kann die Viskosität des Siebdrucköls variiert werden. Dadurch kann die Viskosität stets für die spezifische Anwendung auf einen optimalen Wert eingestellt werden. Insbesondere vorteilhaft hat sich eine Viskosität in der Grössenordnung von 10³ mPa s erwiesen.

Polypropylenglykol ist wasserlöslich, ungiftig und kaum umweltgefährdend, so dass die Verwendung von Polypropylenglykol als Basis des Siebdrucköls keine aufwändigen Sicherheitsvorkehrungen nötig macht.

Alternativ kann als Siebdrucköl jedoch auch ein ätherisches Öl, insbesondere Pinienöl verwendet werden.

Die Siebdruckpaste enthält vorzugsweise pyrogene Kieselsäure, insbesondere in einer Konzentration von 5 - 15 Gew.-%. Durch die Zugabe von pyrogener Kieselsäure können der Siebdruckpaste thixotrope Eigenschaften verliehen werden, womit das Auftragen der Siebdruckpaste auf die mindestens eine Oberfläche vereinfacht werden kann. Dies ist insbesondere vorteilhaft, wenn die Siebdruckpaste mittels Siebdruckverfahren auf die mindestens eine Oberfläche aufgetragen wird.

Die vorliegende Anmeldung betrifft ferner eine Glasscheibe mit einer in einem Bereich mindestens einer Oberfläche reduzierter Natriumkonzentration hergestellt mittels des oben beschriebenen Verfahrens.

Aus der nachfolgenden Detailbeschreibung und der Gesamtheit der Patentansprüche ergeben sich weitere vorteilhafte Ausführungsformen und Merkmalskombinationen der Erfindung.

### Beispiel 1

Es wurde eine Siebdruckpaste mit Zirkon(IV)oxid gemäss dem vorliegenden Verfahren hergestellt. Die Konzentration an Natrium wurde mittels Massenspektrometrie mit induktiv gekoppeltem Plasma (ICP-MS) gemessen und betrug 8.0 mg/kg. Die Siebdruckpaste wurde auf der Feuerseite einer Floatglasscheibe auf einer Fläche von 0.5 m² mittels Siebdruck aufgetragen. Die Siebdruckpaste wurde bei 60° C getrocknet und die Floatglasscheibe anschliessend einem Herstellungsprozess für Einscheibensicherheitsgläser unterzogen, wobei die Floatglasscheibe auf über 600° C erwärmt und anschliessend schlagartig abgekühlt wurde. Die Siebdruckpaste wurde von der Floatglasscheibe abgekratzt und die Konzentration an Natrium mittels Massenspektrometrie mit induktiv gekoppeltem Plasma (ICP-MS) gemessen. Diese Messung ergab eine Konzentration an Natrium in der Siebdruckpaste von 164 mg/kg. Die starke Zunahme der Natriumkonzentration in der Siebdruckpaste nach der thermischen Behandlung belegt, dass das erfindungsgemässe Verfahren einen Entzug von Natrium aus dem Bereich der Glasoberfläche bewirkt.

### Beispiel 2

Es wurde eine Siebdruckpaste mit Zinn(II)sulfid gemäss dem vorliegenden Verfahren hergestellt. Die Konzentrationen an Natrium sowie an Kalzium wurden mittels Massenspektrometrie mit induktiv gekoppeltem Plasma (ICP-MS) gemessen. Die Konzentration von Natirum betrug weniger als 0.4 mg/kg und die Konzentration von Kalzium 23.6 mg/kg. Die Siebdruckpaste wurde auf der Feuerseite einer Floatglasscheibe auf einer Fläche von 0.5 m² mittels Siebdruck aufgetragen. Die Siebdruckpaste wurde bei 60°C getrocknet und die Floatglasscheibe anschliessend einem Herstellungsprozess für Einscheibensicherheitsgläser unterzogen, wobei die Floatglasscheibe auf über 600° C erwärmt und anschliessend schlagartig abgekühlt wurde. Die Siebdruckpaste wurde von der Floatglasscheibe abgekratzt und die Konzentrationen von Natrium sowie von Kalzium mittels Massenspektrometrie mit induktiv gekoppeltem Plasma (ICP-MS) gemessen. Diese Messungen ergaben eine Konzentration von Natrium von 163 mg/kg sowie eine Konzentration von Kalzium von 86.3 mg/kg. Die starke Zunahme der Natriumkonzentration in der Siebdruckpaste nach der thermischen Behandlung belegt, dass das erfindungsgemässe Verfahren einen Entzug von Natrium aus dem Bereich der Glasoberfläche bewirkt.

Ein Vergleich der Kalziumkonzentration der Siebdruckpaste aus dem Beispiel 1, welche vor der thermischen Behandlung 5.3 mg/kg und danach 18.2 kg/mg betrug, zeigt, dass bei der Verwendung von Zinn(II)sulfid anstelle von Zirkon(IV)oxid zusätzlich ein erhöhter Entzug von Kalzium im Bereich einer Oberfläche einer Glasscheibe bewirkt wird. Es wurde zudem beobachtet, dass die Rauheit der Oberfläche bei der Verwendung einer Siebdruckpaste mit Zinn(II)sulfid gegenüber einer Siebdruckpaste mit Zirkon(IV)oxid erhöht werden konnte. Daher liegt ein Zusammenhang mit dem Entzug von Kalzium nahe. Da Floatglas 10 bis 15 Gew.-% an Kalziumoxid umfasst, wird postuliert, dass durch die Diffusion von Kalzium aus der Glasoberfläche in die Siebdruckpaste ein Materialverlust entsteht, welcher zu der erwähnten Rauheit führt. Überraschend war die Beobachtung, dass die Oberfläche des Floatglases gemäss Beispiel 2 trotz der erhöhten Rauheit gegenüber Alterungs- und Verwitterungseffekte beständiger war, als eine unbehandelte Vergleichsoberfläche.

## Patentansprüche

1. Verfahren zur Reduktion der Natriumkonzentration im Bereich mindestens einer Oberfläche einer Glasscheibe, um die Entstehung von Glasalterungs- und Verwitterungseffekten der Glasscheibe zu reduzieren oder zu verhindern, umfassend die Schritte:
a) Vorlegen einer Glasscheibe mit mindestens einer Oberfläche;
b) Auftragen einer Siebdruckpaste umfassend mindestens ein Siebdrucköl auf die mindestens eine Oberfläche;
c) Trocknen der Siebdruckpaste auf der mindestens einen Oberfläche, vorzugsweise bei 60° C;
d) Wärmebehandlung der Glasscheibe bei einer Temperatur von über 500° C, insbesondere bei über 600° C;
e) Entfernung der Siebdruckpaste;
**dadurch gekennzeichnet, dass** die Siebdruckpaste eine Konzentration an Natrium von höchstens 10 ppm aufweist und mindestens ein Metalloxid und/oder ein Metallsulfid umfasst.

2. Verfahren gemäss Anspruch 1, **dadurch gekennzeichnet, dass** die Konzentration von Alkalimetallen in der Siebdruckpaste höchstens 10 ppm beträgt.

3. Verfahren gemäss einem der Ansprüche 1 oder 2, **dadurch gekennzeichnet, dass** als Metalloxid ein thermisch stabiles Metalloxid verwendet wird, insbesondere ein Metalloxid mit einer Schmelztemperatur von über 2000° C.

4. Verfahren gemäss einem der Ansprüche 1 bis 3, **dadurch gekennzeichnet, dass** als Metalloxid ein Metalloxid mit einer Standartbildungsenthalpie kleiner als -800 kJ/mol, insbesondere kleiner als -1100 kJ/mol verwendet wird.

5. Verfahren gemäss einem der Ansprüche 1 bis 4, **dadurch gekennzeichnet, dass** das mindestens eine Metalloxid und/oder mindestens eine Metallsulfid in einer Konzentration von 25 Gew.-% bis 60 Gew.-%, vorzugsweise von 30 bis 52 Gew.-% vorliegt.

6. Verfahren gemäss einem der Ansprüche 1 bis 5, **dadurch gekennzeichnet, dass** als Metalloxid Zirkon(IV)oxid verwendet wird.

7. Verfahren gemäss einem der Ansprüche 1 bis 6, **dadurch gekennzeichnet, dass** als Metallsulfid Zinn(II)sulfid verwendet wird.

8. Verfahren gemäss einem der Ansprüche 1 bis 7, **dadurch gekennzeichnet, dass** das Verhältnis der Konzentration des Metalloxids zur Konzentration des Metallsulfids in der Siebdruckpaste in Gewichtsprozent 1:1 beträgt.

9. Verfahren gemäss einem der Ansprüche 1 bis 8, **dadurch gekennzeichnet, dass** mindestens ein Polypropylenglykol als Siebdrucköl verwendet wird, insbesondere ein Mischung von Polypropylenglykolen mit unterschiedlichen Molekulargewichten.

10. Verfahren gemäss einem der Ansprüche 1 bis 9, **dadurch gekennzeichnet, dass** die Siebdruckpaste pyrogene Kieselsäure enthält, insbesondere in einer Konzentration von 5 - 15 Gew.-%.

11. Glasscheibe mit einer in einem Bereich mindestens einer Oberfläche reduzierter Natriumkonzentration hergestellt mittels eines Verfahrens gemäss einem der Ansprüche 1 bis 10.

## Claims

1. Method for reducing the sodium concentration in the region of at least one surface of a glass sheet in order to reduce or prevent the occurrence of glass ageing and weathering effects on the glass sheet, which comprises the steps:
a) provision of a glass sheet having at least one surface;
b) application of a screen printing paste comprising at least one screen printing oil to the at least one surface;
c) drying of the screen printing paste on the at least one surface, preferably at 60°C;
d) heat treatment of the glass sheet at a temperature of more than 500°C, in particular more than 600°C;
e) removal of the screen printing paste;
**characterized in that** the screen printing paste has a concentration of sodium of not more than 10 ppm and comprises at least one metal oxide and/or a metal sulphide.

2. Method according to Claim 1, **characterized in that** the concentration of alkali metals in the screen printing paste is not more than 10 ppm.

3. Method according to either Claim 1 or 2, **characterized in that** a thermally stable metal oxide, in particular a metal oxide having a melting point of more than 2000°C, is used as metal oxide.

4. Method according to any of Claims 1 to 3, **characterized in that** a metal oxide having a standard enthalpy of formation of less than -800 kJ/mol, in particular less than -1100 kJ/mol, is used as metal oxide.

5. Method according to any of Claims 1 to 4, **characterized in that** the at least one metal oxide and/or at least one metal sulphide is present in a concentration of from 25% by weight to 60% by weight, preferably from 30 to 52% by weight.

6. Method according to any of Claims 1 to 5, **characterized in that** zirconium(IV) oxide is used as metal oxide.

7. Method according to any of Claims 1 to 6, **characterized in that** tin(II) sulphide is used as metal sulphide.

8. Method according to any of Claims 1 to 7, **characterized in that** the ratio of the concentration of the metal oxide to the concentration of the metal sulphide in the screen printing paste in percent by weight is 1:1.

9. Method according to any of Claims 1 to 8, **characterized in that** at least one polypropylene glycol, in particular a mixture of polypropylene glycols having different molecular weights, is used as screen printing oil.

10. Method according to any of Claims 1 to 9, **characterized in that** the screen printing paste contains pyrogenic silica, in particular in a concentration of 5-15% by weight.

11. Glass sheet having a sodium concentration which has been reduced in a region of at least one surface and produced by means of a method according to any of Claims 1 to 10.

## Revendications

1. Procédé de réduction de la concentration en sodium dans la zone d'au moins une surface d'une plaque de verre, afin de réduire ou d'empêcher la formation d'effets de vieillissement et de dégradation du verre de la plaque de verre, comprenant les étapes suivantes :
a) la mise en place d'une plaque de verre ayant au moins une surface ;
b) l'application d'une pâte de sérigraphie comprenant au moins une huile de sérigraphie sur ladite au moins une surface ;
c) le séchage de la pâte de sérigraphie sur ladite au moins une surface, de préférence à 60 °C ;
d) le traitement thermique de la plaque de verre à une température de plus de 500 °C, notamment à plus de 600 °C ;
e) l'élimination de la pâte de sérigraphie ; **caractérisé en ce que** la pâte de sérigraphie présente une concentration en sodium d'au plus 10 ppm, et comprend au moins un oxyde métallique et/ou un sulfure métallique.

2. Procédé selon la revendication 1, **caractérisé en ce que** la concentration de métaux alcalins dans la pâte de sérigraphie est d'au plus 10 ppm.

3. Procédé selon l'une quelconque des revendications 1 ou 2, **caractérisé en ce qu'**un oxyde métallique thermiquement stable est utilisé en tant qu'oxyde métallique, notamment un oxyde métallique ayant une température de fusion de plus de 2000 °C.

4. Procédé selon l'une quelconque des revendications 1 à 3, **caractérisé en ce qu'**un oxyde métallique ayant une enthalpie de formation standard inférieure à -800 kJ/mol, notamment inférieure à -1100 kJ/mol, est utilisé en tant qu'oxyde métallique.

5. Procédé selon l'une quelconque des revendications 1 à 4, **caractérisé en ce que** ledit au moins un oxyde métallique et/ou ledit au moins un sulfure métallique sont présents en une concentration de 25 % en poids à 60 % en poids, de préférence de 30 à 52 % en poids.

6. Procédé selon l'une quelconque des revendications 1 à 5, **caractérisé en ce que** de l'oxyde de zirconium(IV) est utilisé en tant qu'oxyde métallique.

7. Procédé selon l'une quelconque des revendications 1 à 6, **caractérisé en ce que** du sulfure d'étain(II) est utilisé en tant que sulfure métallique.

8. Procédé selon l'une quelconque des revendications 1 à 7, **caractérisé en ce que** le rapport entre la concentration de l'oxyde métallique et la concentration du sulfure métallique dans la pâte de sérigraphie en pourcentage en poids est de 1:1.

9. Procédé selon l'une quelconque des revendications 1 à 8, **caractérisé en ce qu'**au moins un polypropylène glycol est utilisé en tant qu'huile de sérigraphie, notamment un mélange de polypropylène glycols ayant différents poids moléculaires.

10. Procédé selon l'une quelconque des revendications 1 à 9, **caractérisé en ce que** la pâte de sérigraphie contient de la silice pyrogénée, notamment en une concentration de 5 à 15 % en poids.

11. Plaque de verre ayant une concentration en sodium réduite dans une zone d'au moins une surface, fabriquée au moyen d'un procédé selon l'une quelconque des revendications 1 à 10.
